(19) Europäisches Patentamt
European Patent Office
Office européen des brevets

(11) **EP 4 324 893 A1**

(12) **EUROPÄISCHE PATENTANMELDUNG**

(43) Veröffentlichungstag:
**21.02.2024  Patentblatt 2024/08**

(21) Anmeldenummer: **23189637.4**

(22) Anmeldetag: **04.08.2023**

(51) Internationale Patentklassifikation (IPC):
*C09J 5/06* (2006.01)  *C09J 7/22* (2018.01)
*C09J 7/28* (2018.01)  *C09J 7/38* (2018.01)
*C09J 153/02* (2006.01)

(52) Gemeinsame Patentklassifikation (CPC):
**C09J 7/387; C09J 5/06; C09J 7/29; C09J 153/02;**
C09J 2203/326; C09J 2203/354; C09J 2301/124;
C09J 2301/302; C09J 2301/412; C09J 2301/416;
C09J 2301/502; C09J 2400/163; C09J 2453/00

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **19.08.2022   DE 102022121016**

(71) Anmelder: **tesa SE**
**22848 Norderstedt (DE)**

(72) Erfinder:
• **WANG, Shuang**
  **22848 Norderstedt (DE)**
• **KEITE-TELGENBÜSCHER, Klaus**
  **22848 Norderstedt (DE)**
• **KRAWINKEL, Thorsten**
  **22848 Norderstedt (DE)**

(74) Vertreter: **tesa SE**
**Hugo-Kirchberg-Straße 1**
**22848 Norderstedt (DE)**

(54) **LAMINAT**

(57)  Laminat, umfassend folgende Schichten: (i) eine erste Haftklebeschicht, umfassend ein Blockcopolymer, enthaltend mindestens einen Polymerblock gebildet aus Vinylaromaten und mindestens einen Polymerblock gebildet aus Alkenen; (ii) eine Metallschicht; (iii) eine Treibmittelschicht; und (iv) eine zweite Haftklebeschicht, umfassend ein Blockcopolymer, enthaltend mindestens einen Polymerblock gebildet aus Vinylaromaten und mindestens einen Polymerblock gebildet aus Alkenen.

FIG. 3

EP 4 324 893 A1

**Beschreibung**

Die vorliegende Erfindung betrifft ein Laminat. Weiter betrifft die vorliegende Erfindung ein Verfahren zur Herstellung dieses Laminats. Weiter betrifft die vorliegende Erfindung eine Anordnung enthaltend das Laminat und ein Verfahren zum Ablösen des Laminats.

Die meisten Klebebandlösungen sind nicht oder nicht ohne Beschädigung der Substrate ablösbar. Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert. Im Fokus der vorliegenden Erfindung ist das zuverlässige Trennen zweier Substrate, die mit einem Laminat verklebt sind. Einige Konzepte des Ablösens werden von C. Sato in "Recycling and environmental aspects", 2011, 58, 20, Seiten 1506-1526 und von A. Hutchinson et al. in Journal of Adhesion, 2016 "Overview of disbonding technologies for adhesive bonded joints", Seiten 737-755 beschrieben. Einen systematischen Ansatz zur Einordnung von Debonding-Technologien liefert ebenfalls der DIN-Normenausschuss Materialprüfung (NA 062-10-02 AA Prüfmethoden in der konstruktiven Klebtechnik).

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus. Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels. So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

EP2493995B1 beschreibt ein Verfahren zum Verkleben eines hitzeaktiviert verklebbaren Flächenelements mit einem Verklebungssubstrat, das einen Wärmeleitungskoeffizienten von höchstens 5 W/mK aufweist. In dem Verfahren werden Flächenelemente mit der Klebeschicht in Kontakt gebracht und anschließend unter Druck in einem elektromagnetischen Wechselfeld induktiv bei einer Frequenz von 100 Hz bis 200 kHz für eine Dauer von höchstens 20 s bei einem Pressdruck von mindestens 1 MPa induktiv verklebt.

EP1814703B1 beschreibt einen Prozess zum Recyceln elektrischer oder elektronischer Bauteile, wobei eine mittels einer Haftklebemasse bewirkte Verklebung zweier Komponenten des Bauteils gelöst wird, indem sich in der Haftklebemasse befindliche expandierbare Partikel durch Zufuhr von Energie ausdehnen und dabei den Klebeverbund aufsprengen.

EP2516573B1 beschreibt ein Verfahren zum Verkleben und Wiederlösen zweier Substratoberflächen, wobei für die Verklebung ein hitzeaktiviert verklebbares Flächenelement mit zwei Schichten unterschiedlicher hitzeaktivierbarer Klebemassen eingesetzt wird. Die Verklebung findet bei einer Temperatur T1 statt, bei der eine gleichzeitige Hitzeaktivierung der beiden hitzeaktivierbaren Klebemassen erfolgt. Das Wiederlösen erfolgt bei einer Temperatur T2, bei der unter vorgegebenen Bedingungen lediglich eine der hitzeaktivierbaren Schichten des hitzeaktiviert verklebbaren Flächenelementes ihre Klebewirkung im Klebeverbund soweit verliert, dass der Klebeverbund getrennt wird.

Die bekannten Mechanismen zur Ablösung werden in der Regel in der Klebstoffschicht selbst und/oder in der Grenzfläche des Klebstoffs zum Substrat verwirklicht.

Es ist daher wünschenswert, ein Laminat, ein Verfahren und eine Anordnung bereitzustellen, die die beschriebenen Nachteile vorgenannter Laminate, Verfahren und Anordnungen vermeiden oder weitestgehend vermeiden. Insbesondere soll ein Laminat bereitgestellt werden bei dem die Klebverbindung zwischen zwei Substraten und/oder ein entsprechendes Klebeband bzw. eine Vorrichtung aus Klebebändern zuverlässig gelöst werden kann. Dabei soll die Bewahrung einer hohen und dauerhaft zuverlässigen Verklebungsfestigkeit mit einer schnellen Lösbarkeit kombiniert werden. Zudem können die Fügepartner sehr einfach wieder gesäubert werden, so dass sie ohne Aufwand wiederverwendet werden können.

Diese Aufgabe wird adressiert durch ein Laminat umfassend eine erste Haftklebeschicht, umfassend ein Blockcopolymer, enthaltend mindestens einen Polymerblock gebildet aus Vinylaromaten und mindestens einen Polymerblock gebildet aus Alkenen, eine Metallschicht, die durch magnetische Induktion erwärmbar ist, eine Treibmittelschicht; und eine zweite Haftklebeschicht, umfassend ein Blockcopolymer, enthaltend mindestens einen Polymerblock gebildet aus Vinylaromaten und mindestens einen Polymerblock gebildet aus Alkenen. Dabei kann mindestens eine Haftklebeschicht durch dehnendes Verstrecken entfernt werden.

Daher betrifft die vorliegende Erfindung ein Laminat umfassend folgende Schichten:

(i) eine erste Haftklebeschicht, umfassend ein Blockcopolymer, enthaltend mindestens einen Polymerblock gebildet aus Vinylaromaten und mindestens einen Polymerblock gebildet aus Alkenen;

(ii) eine Metallschicht;

(iii) eine Treibmittelschicht; und

(iv) eine zweite Haftklebeschicht, umfassend ein Blockcopolymer, enthaltend mindestens einen Polymerblock gebildet aus Vinylaromaten und mindestens einen Polymerblock gebildet aus Alkenen.

Als Laminat bezeichnet man einen Werkstoff oder ein Produkt, das aus zwei oder mehreren flächig miteinander verklebten Schichten besteht. Diese Schichten können aus gleichen oder unterschiedlichen Materialien bestehen. Die Herstellung eines Laminats kann sowohl durch Lamination als auch durch Direktbeschichtung erfolgen.

Bevorzugt umfasst die erste Haftklebeschicht gemäß (i) und/oder die zweite Haftklebeschicht gemäß (iv) eine Elastomerkomponente (a), eine Klebharzkomponente (b) und optional eine Weichharzkomponente (c). Besonders bevorzugt umfasst die erste Haftklebeschicht gemäß (i) und/oder die zweite Haftklebeschicht gemäß (iv) eine Elastomerkomponente (a), eine Klebharzkomponente (b) und eine Weichharzkomponente (c).

Bevorzugt umfasst die Elastomerkomponente gemäß (a) ein Blockcopolymer mit einem Aufbau A-B-A, (A-B)n, (A-B)nX oder (A-B-A)nX, bevorzugt ein Diblockcopolymer A-B und/oder ein Triblockcopolymer A-B-A, worin

- die Blöcke A unabhängig voneinander ein Polymer herstellbar aus einer Polymerisationsmischung enthaltend Vinylaromatenmonomere mit 8 bis 12 C-Atomen;

- die Blöcke B unabhängig voneinander ein Polymer herstellbar aus einer Polymerisationsmischung enthaltend Alkenmonomere mit 4 bis 18 C-Atomen;

- X ein Rest eines Kopplungsreagenzes oder Initiators und

- $n \geq 2$, umfassen.

Das Kopplungsreagenz wird eingesetzt, um zwei oder mehr Vinylaromaten-Dien-Diblöcke miteinander zu verbinden. Der Initiator wird für die Herstellung der Elastomerkomponente gemäß (a) verwendet, dieses könnte z.B. Natriumnaphthalid sein, das ein Kettenwachstum in zwei Richtungen ermöglicht.

Bevorzugt sind die Blöcke A herstellbar aus einer Polymerisationsmischung enthaltend Styrol und $\alpha$-Methylstyrol, bevorzugt herstellbar aus einer Polymerisationsmischung enthaltend Styrol.

Bevorzugt sind die Blöcke B herstellbar aus einer Polymerisationsmischung enthaltend Monomere von 1,3-Dienen und Isobutylen, weiter bevorzugt herstellbar aus einer Polymerisationsmischung enthaltend Butadien und/oder Isopren.

Um Polydienen einen haftklebrigen Charakter zu verleihen, müssen sie mit Klebharzen versetzt werden. Dies gilt auch für Vinylaromaten-Blockcopolymere, die Polydien-Blöcke enthalten.

Bevorzugt weisen die Blöcke A einen Anteil im Blockcopolymer in einem Bereich von 14 bis 35 Gew.-%, weiter bevorzugt in einem Bereich von 14 bis 30 Gew.-% auf.

Bevorzugt weisen die Blöcke B einen Anteil im Blockcopolymer in einem Bereich von 65 bis 86 Gew.-% auf.

Die Haftklebeschicht weist neben dem mindestens einen Vinylaromatenblockcopolymer mindestens eine Klebharzkomponente (b) auf, um die Adhäsion in gewünschter Weise zu erhöhen. Die Klebharzkomponente (b) sollte mit den Elastomerkomponente (a) der Blockcopolymere und insbesondere mit den Blöcken B der Blockcopolymere verträglich sein.

Unter einer "Klebharzkomponente" wird entsprechend dem allgemeinem Fachmannverständnis ein oligomeres oder polymeres Harz verstanden, das die Adhäsion (den Tack, die Eigenklebrigkeit) der Haftklebeschicht im Vergleich zu der keine Klebharzkomponente enthaltenden, ansonsten aber identischen Haftklebeschicht erhöht.

Bevorzugt weist die Klebharzkomponente gemäß (b) ein gewichtsmittleres Molekulargewicht MW, bestimmt gemäß Prüfmethode 1 in einem Bereich von 400 bis 15.000 g/mol, weiter bevorzugt in einem Bereich von 400 bis 5.000 g/mol, weiter bevorzugt in einem Bereich von 500 bis 2.000 g/mol auf.

Bevorzugt umfasst die Klebharzkomponente gemäß (b) ein oder mehrere Materialien, ausgewählt aus der Gruppe bestehend aus nicht hydrierten, partiell oder vollständig hydrierten Harzen auf Basis von Kolophonium oder Kolophoniumderivaten, hydrierten Polymerisaten des Dicyclopentadiens, nicht hydrierten, partiell, selektiv oder vollständig hydrierten Kohlenwasserstoffharzen auf Basis von C-5, C-5/C-9 oder C-9 Monomergemischen und Polyterpenharzen auf Basis von $\alpha$-Pinen und/oder $\beta$-Pinen und/oder $\delta$-Limonen.

Die Klebharzkomponente gemäß (b) kann sowohl allein als auch im Gemisch eingesetzt werden.

Bevorzugt weist die Weichharzkomponente gemäß (c) eine Erweichungstemperatur von < 30 °C, bestimmt gemäß Prüfmethode 2, auf.

Bevorzugt umfasst die Weichharzkomponente gemäß (c) ein Kolophonium-, ein Kohlenwasserstoff- oder Polyterpen-basierendes Weichharz.

Bevorzugt umfasst die erste Haftklebeschicht gemäß (i) und/oder die zweite Haftklebeschicht gemäß (iv) die Weichharzkomponente gemäß (c) in einem Bereich von 0.1 bis 15 Gew.-%, weiter bevorzugt 2 bis 10 Gew.-%.

Bevorzugt umfasst die erste Haftklebeschicht gemäß (i) und/oder die zweite Haftklebeschicht gemäß (iv) zusätzlich Additive (d).

Bevorzugt umfassen die Additive gemäß (d) ein oder mehrere Materialien, ausgewählt aus der Gruppe bestehend aus Lichtschutzmitteln, Flammschutzmitteln, Füllstoffen, Farbstoffen, Pigmenten, Plastifizierungsmitteln, Antioxidationsmitteln, Prozessstabilisatoren, Verarbeitungshilfsmitteln und Endblockverstärkerharzen.

Die Haftklebeschicht kann beliebig gefärbt oder weiß, grau oder schwarz sein.

Als solche oder andere weitere Additive können typischerweise genutzt werden:

- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebeschicht,

- Plastifizierungsmittel wie zum Beispiel niedermolekulare flüssige Polymere, wie zum Beispiel niedermolekulare Polybutene, vorzugsweise mit einem Anteil von 0,2 bis unter 5 Gew.-% bezogen auf das Gesamtgewicht der Haftklebeschicht,

- Antioxidationsmittel, wie zum Beispiel primäre Antioxidationsmittel wie zum Beispiel sterisch gehinderte Phenole, vorzugsweise mit einem Anteil von 0,2 bis 1 Gew.-% bezogen auf das Gesamtgewicht der Haftklebeschicht, und wie zum Beispiel sekundäre Antioxidationsmittel, wie zum Beispiel Phosphite oder Thioether, vorzugsweise mit einem Anteil von 0,2 bis 1 Gew.-% bezogen auf das Gesamtgewicht der Haftklebeschicht,

- Prozessstabilisatoren wie zum Beispiel C-Radikalfänger, vorzugsweise mit einem Anteil von 0,2 bis 1 Gew.-% bezogen auf das Gesamtgewicht der Haftklebeschicht,

- Verarbeitungshilfsmittel, vorzugsweise mit einem Anteil von 0,2 bis 1 Gew.-% bezogen auf das Gesamtgewicht der Haftklebeschicht,

- Endblockverstärkerharze, falls gewünscht vorzugsweise mit einem Anteil von 0,2 bis 10 Gew.-% bezogen auf das Gesamtgewicht der Haftklebeschicht,

- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebeschicht.

Die Art und Menge der Additive kann bedarfsweise ausgewählt werden. Erfindungsgemäß ist es auch, wenn die Klebeschicht einige oder sogar alle der genannten Additive jeweils nicht aufweist.

Hinsichtlich der Dicke der Haftklebeschicht gibt es grundsätzlich keine besonderen Einschränkungen. Bevorzugt weist die erste Haftklebeschicht gemäß (i) und/oder die zweite Haftklebeschicht gemäß (iv) eine Dicke in einem Bereich von 25 bis 3000 $\mu$m, weiter bevorzugt in einem Bereich von $\mu$m 50 bis 1000 $\mu$m auf.

Bevorzugt sind im Laminat die erste Haftklebeschicht und die zweite Haftklebeschicht hinsichtlich ihrer Zusammensetzung identisch. Alternativ können sie sich hinsichtlich ihrer Zusammensetzung unterscheiden. Außerdem weisen im Laminat die erste Haftklebeschicht und die zweite Haftklebeschicht bevorzugt die gleiche Dicke auf. Alternativ können sie sich hinsichtlich ihrer Dicke unterscheiden.

Bevorzugt ist die erste Haftklebeschicht gemäß (i) und/oder die zweite Haftklebeschicht gemäß (iv) eine durch Dehnung in Richtung der Verklebungsebene wiederablösbare Haftklebeschicht.

Die erste Haftklebeschicht und/oder die zweite Haftklebeschicht ist selbstklebend, hoch dehnbar und zum großen Teil elastisch, und lässt sich durch dehnendes Verstrecken in der Verklebungsebene rückstands- und zerstörungsfrei wieder ablösen. Diese Eigenschaft wird auch als strippfähig bezeichnet. Damit strippfähige Haftklebeschichten leicht und rückstandsfrei wieder abgelöst werden können, müssen sie bestimmte klebtechnische Eigenschaften besitzen:

Beim Verstrecken muss die Klebrigkeit der Haftklebeschicht deutlich sinken. Je niedriger die Klebleistung im verstreckten Zustand ist, umso weniger stark wird der Untergrund beim Ablösen beschädigt. Weitere Ausführungen bezüglich der Haftklebeschicht sind in der EP3578618B1 offenbart.

Bevorzugt weist die erste Haftklebeschicht gemäß (i) und/oder die zweite Haftklebeschicht gemäß (iv) eine Reißdehnung von mindestens 100 %, bestimmt gemäß Prüfmethode 3 und einem Rückstellvermögen von über 50 %, bestimmt gemäß Prüfmethode 4, auf.

Bevorzugt umfasst die Metallschicht gemäß (ii) ein oder mehrere Materialien, ausgewählt aus der Gruppe bestehend aus Aluminium, Kupfer, Nickel, Eisen und Stahl, weiter bevorzugt Aluminium und Kupfer.

Hinsichtlich der Dicke der Metallschicht gibt es grundsätzlich keine besonderen Einschränkungen. Bevorzugt weist die Metallschicht gemäß (ii) eine Dicke in einem Bereich von 1 bis 200 $\mu$m, weiter bevorzugt in einem Bereich von 5 bis 100 $\mu$m auf.

Bevorzugt umfasst die Metallschicht gemäß (ii) zusätzlich einen Träger, wobei der Träger ein oder mehrere Materialien umfasst, ausgewählt aus der Gruppe bestehend aus Polyethylenterephthalat, Polyethylen und Polypropylen, bevorzugt Polyethylenterephthalat. Bei Anwesenheit eines Trägers ist die Treibmittelschicht gemäß (iii) bevorzugt auf der Seite der Metallschicht angeordnet.

Bevorzugt kann die Metallschicht gemäß (ii) induktiv erwärmt werden. Weiter bevorzugt kann die Metallschicht gemäß (ii) auf eine Temperatur in einem Bereich 50 bis 200 °C, besonders bevorzugt in einem Bereich von 70 bis 180 °C, in einem Magnet-Feld einer Frequenz in einem Bereich von 100 Hz bis 200 kHz, bevorzugt in einem Bereich von 5 kHz bis 50 kHz, besonders bevorzugt in einem Bereich von 10 kHz bis 30 kHz, weiter bevorzugt für eine Zeitdauer in einem Bereich von 1 bis 20 s, besonders bevorzugt in einem Bereich von 5 bis 15 s erwärmt werden.

Bevorzugt umfasst die Treibmittelschicht gemäß (iii) ein oder mehrere Materialien, ausgewählt aus der Gruppe bestehend aus Azoverbindungen, Hydrazinverbindungen, Sulfonylsemicarbazidverbindungen, Tetrazolverbindungen, N-Nitrosoverbindungen und Carbonatverbindungen.

Bevorzugt umfasst die Treibmittelschicht gemäß (iii) expandierbare, thermoplastische Mikrosphären.

Bevorzugt umfassen die expandierbaren, thermoplastischen Mikrosphären eine thermoplastische Polymerschale und ein darin eingeschlossenes Treibmittel.

Expandierbare, thermoplastische Mikrosphären, auch Mikroballons oder Mikrokugeln, sind kommerziell erhältlich zum Beispiel unter der Marke EXPANCEL®. In solchen Mikrosphären ist das Treibmittel in der Regel eine Flüssigkeit mit einem Siedepunkt nicht höher als die Erweichungstemperatur der thermoplastischen Polymerhülle. Die Erweichungstemperatur der Polymerhülle, normalerweise entsprechend seiner Glasübergangstemperatur $T_g$, liegt vorzugsweise innerhalb des Bereichs von 0 bis 140 °C, weiter bevorzugt von 30 bis 100 °C. Beim Erhitzen verdampft das Treibmittel und erhöht dabei den Innendruck und gleichzeitig erweicht die Schale, was zu einer erheblichen Vergrößerung der Mikrosphären führt. Die Temperatur, bei der die Expansion beginnt, heißt $T_{start}$, während die Temperatur, bei der die maximale Ausdehnung erreicht wird, als $T_{max}$ bezeichnet wird. $T_{start}$ für die expandierbaren, thermoplastischen Mikrosphären ist bevorzugt von 40 bis 140 °C, am meisten bevorzugt von 50 bis 100 °C. $T_{max}$ der expandierbaren, thermoplastischen Mikrosphären ist höher als $T_{start}$ und bevorzugt von 80 bis 200 °C, weiter bevorzugt von 100 bis 170 °C.

Hinsichtlich der Dicke der Treibmittelschicht gibt es grundsätzlich keine besonderen Einschränkungen. Bevorzugt weist die Treibmittelschicht gemäß (iii) eine Dicke in einem Bereich von 10 bis 150 $\mu$m, weiter bevorzugt in einem Bereich von 25 bis 100 $\mu$m auf.

Besonders bevorzugt enthält die Treibmittelschicht gemäß (iii) expandierbare, thermoplastische Mikrosphären, die im nicht expandierten Zustand bei 25 °C einen mittleren Durchmesser von 3 $\mu$m bis 30 $\mu$m, weiter bevorzugt von 5 $\mu$m bis 20 $\mu$m, und/oder nach Expansion einen mittleren Durchmesser von 10 $\mu$m bis 200 $\mu$m, bevorzugt von 15 $\mu$m bis 90 $\mu$m, aufweisen. Der mittlere Durchmesser der nicht-expandierten Mikrosphären liegt bevorzugt unterhalb der Schichtdicke der Treibmittelschicht.

Bevorzugt umfasst die Treibmittelschicht gemäß (iii) mindestens 50 Gew.-%, weiter bevorzugt mindestens 90 Gew.-% eines thermoplastischen Polyurethans.

Bevorzugt umfasst das thermoplastische Polyurethan mindestens eine Polyisocyanatkomponente und mindestens eine Polyolkomponente.

Bevorzugt umfasst das thermoplastische Polyurethan eine thermoplastische Polyurethan-Dispersion.

Als Polyurethan-Dispersion im Sinne der vorliegenden Erfindung können insbesondere die folgenden Dispersionen, optional in Kombination, zum Einsatz kommen:

- anionisch stabilisierte aliphatische Polyester-Polyurethan-Dispersionen (Dispersionen auf Basis von Polyester und aliphatischem anionischem Isocyanat-Polyurethan). Hierzu gehören die folgenden Produkte, die von der Covestro AG vertrieben werden: Impranil® LP RSC 1380, DL 1537 XP, DL 1554 XP,

- anionisch stabilisierte aliphatische Polyether-Polyurethan-Dispersionen. Zu diesen zählen die folgenden Produkte, die von der Covestro AG vertrieben werden: Impranil® 25 LP DSB 1069,

- anionisch stabilisierte aliphatische Polycarbonat-Polyester-Polyurethan-Dispersionen. Zu diesen zählen die folgenden Produkte, die von der Covestro AG vertrieben werden: Impranil®DLU und

- anionisch stabilisierte Polycarbonat-Polyurethan-Dispersionen. Zu diesen zählen die folgenden Produkte, die von der Covestro AG vertrieben werden: Impranil® DL 2288 XP.

Bevorzugt ist das thermoplastische Polyurethan herstellbar aus einer Polymerisationsmischung enthaltend mindestens ein Diisocyanat, mindestens ein Polyesterpolyol und optional mindestens ein Alkandiol.

Bevorzugt ist das mindestens eine Diisocyanat ausgewählt aus der Gruppe bestehend aus Toluoldiisocyanat (TDI), p-Phenylendiisocyanat (PPDI), 4,4'-Diphenylmethandiisocyanat (MDI), p,p'-Bisphenyldiisocyanat (BPDI), Isophorondiisocyanat (IPDI), 1,6-Hexamethylenediisocynat (HDI), oder 4,4'-Diisocyanatodicyclohexylmethan (H12MDI), bevorzugt Toluoldiisocyanat (TDI).

Ebenso kommen Diisocyanate mit Substituenten in Form von Halo-, Nitro-, Cyano-, Alkyl-, Alkoxy-, Haloalkyl-, Hydroxyl-, Carboxy-, Amido-, Amino- oder deren Kombinationen in Frage.

Insgesamt können alle an sich bekannten aliphatischen, cycloaliphatischen, araliphatischen und vorzugsweise die aromatischen mehrwertigen Isocyanate zum Einsatz kommen.

Im Einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-1,4-diisocyanat, 2-Methylpentamethylen-1,5-diisocyanat, Tetramethylen-1,4-diisocyanat, und vorzugsweise Hexamethylen-1,6-diisocyanat; cycloaliphatische Diisocyanate wie Cyclohexan-1,3-diisocyanat und Cyclohexan-1,4-diisocyanat und beliebige Gemische dieser Isomeren, 1-Isocyanato-3,3,5-trimethyl-5-isocyanatomethylcyclohexan (Isophorondiisocyanat), 2,4- und 2,6 Hexahydrotoluylendiisocyanat sowie beliebige Gemische dieser Isomeren, 4,4'-, 2,4'- und 2,2'-Dicyclohexylmethandiisocyanat sowie beliebige Gemische dieser Isomeren, und vorzugsweise aromatische Di- und Polyisocyanate, wie beispielsweise 2,4- und 2,6-Toluylen-diisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'- Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugt weist die Polyisocyanatkomponente ein zahlenmittleres Molekulargewicht $M_n$, bestimmt gemäß Prüfmethode 1, in einem Bereich von 60 bis 50.000 g/mol, weiter bevorzugt in einem Bereich von 400 bis 10.000 g/mol, weiter bevorzugt in einem Bereich von 400 bis 6.000 g/mol auf.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht. Beispiele sind mit niedermolekularen Diolen, Triolen, Dialkylenglycolen, Trialkylenglycolen oder Polyoxyalkylenglycolen mit zahlenmittleren Molekulargewichten bis 6.000 g/mol, insbesondere bis 1.500 g/mol, modifiziertes Roh-MDI oder 2,4- bzw. 2,6-Toluylen-diisocyanat. Beispiele für geeignete Di- bzw. Polyoxyalkylenglycole sind Diethylen-, Dipropylen-, Polyoxyethylen-, Polyoxypropylen und Polyoxypropylenpolyoxyethylenglycole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethan-diisocyanat, 2,4- und/oder 2,6-Toluylendiisocyanat oder Roh-MDI. Bewährt haben sich ferner flüssige, Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, beispielsweise auf Basis von 4,4'-, 2,4'- und/oder 2,2'-Diphenylmethandiisocyanat und/oder 2,4- und/oder 2,6-Toluylen-diisocyanat.

Die modifizierten Polyisocyanate können miteinander oder mit unmodifizierten organischen Polyisocyanaten wie beispielsweise 2,4'-, 4,4'-Diphenylmethandiisocyanat, Roh-MDI, 2,4- und/oder 2,6-Toluylen-diisocyanat gemischt werden.

Besonders bewährt als Isocyanate haben sich Diphenylmethan-diisocyanat-Isomerengemische oder Roh-MDI und insbesondere Roh-MDI mit einem Diphenylmethandiisocyanat-Isomerengehalt von 30 bis 55 Gew.-% sowie urethangruppenhaltige Polyisocyanatgemische auf Basis von Diphenylmethan-diisocyanat mit einem NCO-Gehalt von 15 bis 33 Gew.-%.

Bevorzugt umfasst die Polyolkomponente ein oder mehrere Materialien ausgewählt aus der Gruppe bestehend aus Alkandiolen, Polyetherdiolen, Polyesterdiolen, Polycarbonatdiolen, Polycaprolactonpolyolen und Polyacrylatpolyolen, bevorzugt Polyetherdiolen, Polyesterdiolen und Polycarbonatdiolen.

Weiter bevorzugt umfasst die Polyolkomponente ein oder mehrere Materialien ausgewählt aus der Gruppe bestehend aus Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol, bevorzugt Butandiol.

Bevorzugt weist die Polyolkomponente ein zahlenmittleres Molekulargewicht $M_n$, bestimmt gemäß Prüfmethode 1 in einem Bereich von 60 bis 50.000 g/mol, weiter bevorzugt in einem Bereich von 400 bis 10.000 g/mol, weiter bevorzugt in einem Bereich von 400 bis 6.000 g/mol aufweist. Weitere Ausführungen bezüglich der Treibmittelschicht sind in der DE102020210503A1 offenbart.

Bevorzugt ist die Treibmittelschicht gemäß (iii) bei einer Temperatur in einem Bereich von 40 bis 200 °C, weiter bevorzugt in einem Bereich von 50 bis 120 °C ablösbar.

Weiter betrifft die vorliegende Erfindung ein Verfahren zur Herstellung des Laminats, wie hierin beschrieben, wobei die erste Haftklebeschicht gemäß (i) und/oder die zweite Haftklebeschicht gemäß (iv) durch direkte Beschichtung oder durch Laminierung, bevorzugt Heißlaminierung aufgetragen wird.

Dabei wird die Treibmittelschicht bevorzugt direkt auf die Metallschicht beschichtet. Die Treibmittelschicht kann sowohl aus Lösung als auch aus Dispersion auf die Metallschicht beschichtet werden. Zum Auftragen der Treibmittelschicht können Rakelverfahren, Düsenrakelverfahren, Rollstabdüsenverfahren, Extrusionsdüsenverfahren, Gießdüsen- und Gießverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Ein Auftragen aus Hotmelt ist möglich, es muss aber darauf geachtet werden, dass die Beschichtungstemperatur niedriger ist als die Temperatur, die zum Expandieren der Schicht benötigt wird.

Falls die Metallschicht noch eine weitere Schicht, wie eine Kunststoffschicht zur besseren Verarbeitung enthält, sollte die Treibmittelschicht auf die Metallseite beschichtet werden, um einen besseren Wärmeübergang zu erhalten. Eine Transferbeschichtung, zuerst auf einen Liner und Kaschierung auf die Metallschicht ist nur möglich, wenn die Treibmittelschicht eine gewisse Klebrigkeit besitzt.

Die Herstellung und Verarbeitung der Haftklebeschicht kann sowohl aus der Lösung als auch aus der Schmelze erfolgen. Das Aufbringen der Haftklebeschicht kann durch direkte Beschichtung oder durch Laminierung, insbesondere Heißlaminierung erfolgen. Zum Auftragen der Haftklebeschicht können Rakelverfahren, Düsenrakelverfahren, Rollstabdüsenverfahren, Extrusionsdüsenverfahren, Giessdüsen- und Giesserverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Bevorzugt werden Hotmeltverfahren (Extrusion, Düse).

Dabei kann die Beschichtung sowohl direkt auf die Metallschicht oder die Treibmittelschicht erfolgen oder es wird zuerst auf einen Liner beschichtet und dann die Klebmasse durch Lamination auf die Metallschicht bzw. die Treibmittelschicht durch Kaschierung aufgebracht.

Liner können in diesem Zusammenhang Folien oder Papiere sein, die antihaftbeschichtet sind. Häufig werden silikonisierte Folien als Liner eingesetzt. Die Beschichtung auf einen Liner und anschließende Kaschierung auf die Metall- bzw. Treibmittelschicht hat den Vorteil, dass in diesem Prozess weder die Treibmittelschicht noch die Metallschicht einer erhöhten Temperatur ausgesetzt werden müssen.

Gegebenenfalls werden weitere Schichten oder Materiallagen anschließend inline oder offline zukaschiert oder beschichtet, sodass auch mehrschichtige /-lagige Produktaufbauten erzeugt werden können.

Weiter betrifft die vorliegende Erfindung eine Anordnung, umfassend das Laminat, wie hierin beschrieben und mindestens ein Substrat, bevorzugt mindestens zwei Substrate, weiter bevorzugt befindet sich das Laminat, wie hierin beschrieben, zwischen zwei Substraten.

Weiter betrifft die vorliegende Erfindung ein Verfahren zum Ablösen des Laminats, wie hierin beschrieben, umfassend:

- Aussetzen der Anordnung, wie hierin beschrieben einem induktiven Erwärmen in einem Magnet-Wechselfeld einer Frequenz in einem Bereich von 100 Hz bis 200 kHz, bevorzugt in einem Bereich von 5 kHz bis 50 kHz, besonders bevorzugt in einem Bereich von 10 kHz bis 30 kHz; und/oder

- Aussetzen der Anordnung, wie hierin beschrieben einer Temperatur in einem Bereich von 40 bis 200 °C, bevorzugt von 50 bis 120 °C; und

- Trennen des Laminats von mindestens einem Substrat, bevorzugt von mindestens zwei Substraten.

Bevorzugt umfasst das Trennen eine Expansion der Treibmittelschicht gemäß (iii).

Nach dem Trennen des Laminats durch die Expansion der Treibmittelschicht befinden sich auf einem Substrat Laminatreste mit der Metallschicht und auf dem anderen Substrat Laminatreste ohne die Metallschicht. Die verbliebenen Klebmasseteile des Laminats auf der Seite mit der Metallschicht können leicht durch Abschälen entfernt werden. Die Metallschicht sorgt dafür, dass die Lagen des Laminats fest genug sind, um nicht beim Schälen zu zerreißen. Die besondere Art der Haftklebeschicht sorgt durch die hohe Kohäsion dafür, dass keine Klebmasserückstände auf dem Untergrund zurückbleiben.

Die andere Seite ohne die Metallschicht kann leicht durch dehnendes Verstrecken entfernt werden. Durch das dehnende Verstrecken nimmt die Verklebungsfestigkeit der Haftklebeschicht inklusive der Reste der Treibmittelschicht ab, sodass sich die verbleibenden Laminatreste rückstandsfrei entfernen lassen.

Durch die Möglichkeit, das Laminat rückstandsfrei zu entfernen, entfällt der hohe Reinigungsaufwand, falls die Substrate erneut genutzt werden sollen. Eine erneute Verklebung ist ohne oder nur mit sehr geringem Reinigungsaufwand möglich.

Außerdem bevorzugt umfasst das Trennen ein dehnendes Verstrecken in Richtung der Verklebungsebene der ersten Haftklebeschicht gemäß (i) und/oder der zweiten Haftklebeschicht gemäß (iv).

Bevorzugt können durch das dehnende Verstrecken in Richtung der Verklebungsebene die Klebmasserückstände der ersten Haftklebeschicht gemäß (i) und/oder der zweiten Haftklebeschicht gemäß (iv) rückstandsfrei oder fast rückstandsfrei vom Untergrund gelöst werden.

Weiter betrifft die vorliegende Erfindung die Verwendung des Laminats, wie hierin beschrieben, in elektronischen Geräten, Automobilen, medizinischen Geräten und zahnmedizinischen Geräten.

Die vorliegende, wie oben beschriebene Erfindung wird weiterhin durch den folgenden Satz an Ausführungsformen und Kombinationen von Ausführungsformen beschrieben, wobei sich die Kombinationen aus den entsprechenden Abhängigkeiten und Rückbezügen ergeben. Insbesondere sei darauf hingewiesen, dass in denjenigen Stellen, an denen ein Bereich von Ausführungsformen erwähnt ist - wie beispielsweise im Zusammenhang mit einem Ausdruck wie "Laminat gemäß einer der Ausführungsformen 1 bis 5" -, jede einzelne Ausführungsform in diesem Bereich als für den Fachmann explizit offenbart ist, dieser Ausdruck vom Fachmann also als synonym zu dem Ausdruck " Laminat gemäß einer der Ausführungsformen 1, 2, 3, 4 und/oder 5" verstanden wird. Weiter sei explizit darauf hingewiesen, dass der folgende Satz an Ausführungsformen nicht den Satz an den Schutzbereich bestimmenden Patentansprüchen, sondern einen geeignet strukturierten Teil der Beschreibung darstellt, der auf allgemeine und bevorzugte Aspekte der vorliegenden Erfindung gerichtet ist.

1. Laminat, umfassend folgende Schichten:

    (i) eine erste Haftklebeschicht, umfassend ein Blockcopolymer, enthaltend mindestens einen Polymerblock gebildet aus Vinylaromaten und mindestens einen Polymerblock gebildet aus Alkenen;

    (ii) eine Metallschicht;

    (iii) eine Treibmittelschicht; und

    (iv) eine zweite Haftklebeschicht, umfassend ein Blockcopolymer, enthaltend mindestens einen Polymerblock gebildet aus Vinylaromaten und mindestens einen Polymerblock gebildet aus Alkenen.

2. Laminat gemäß Ausführungsform 1, wobei die erste Haftklebeschicht gemäß (i) und/oder die zweite Haftklebeschicht gemäß (iv) eine Elastomerkomponente (a), eine Klebharzkomponente (b) und optional eine Weichharzkomponente (c), bevorzugt eine Elastomerkomponente (a), eine Klebharzkomponente (b) und eine Weichharzkomponente (c) umfasst.

3. Laminat gemäß Ausführungsform 2, wobei die Elastomerkomponente gemäß (a) ein Blockcopolymer mit einem Aufbau A-B-A, $(A\text{-}B)_n$, $(A\text{-}B)_n X$ oder $(A\text{-}B\text{-}A)_n X$, bevorzugt ein Diblockcopolymer A-B und/oder ein Triblockcopolymer A-B-A, umfasst worin

    - die Blöcke A unabhängig voneinander ein Polymer herstellbar aus einer Polymerisationsmischung enthaltend Vinylaromatenmonomere mit 8 bis 12 C-Atomen;

    - die Blöcke B unabhängig voneinander ein Polymer herstellbar aus einer Polymerisationsmischung enthaltend Alkenmonomere mit 4 bis 18 C-Atomen;

    - X ein Rest eines Kopplungsreagenzes oder Initiators umfasst und

    - $n \geq 2$ ist.

4. Laminat gemäß Ausführungsform 3, wobei die Blöcke A herstellbar sind aus einer Polymerisationsmischung enthaltend Styrol und α-Methylstyrol, bevorzugt herstellbar sind aus einer Polymerisationsmischung enthaltend Styrol.

5. Laminat gemäß Ausführungsform 3 oder 4, wobei die Blöcke B herstellbar sind aus einer Polymerisationsmischung enthaltend Monomere von 1,3-Dienen und Isobutylen, bevorzugt herstellbar sind aus einer Polymerisationsmischung enthaltend Butadien und/oder Isopren.

6. Laminat gemäß einer der Ausführungsformen 3 bis 5, wobei die Blöcke A einen Anteil im Blockcopolymer in einem Bereich von 14 bis 35 Gew.-%, bevorzugt in einem Bereich von 14 bis 30 Gew.-%, aufweisen.

7. Laminat gemäß einer der Ausführungsformen 3 bis 6, wobei die Blöcke B einen Anteil im Blockcopolymer in einem Bereich von 65 bis 86 Gew.-% aufweisen.

8. Laminat gemäß einer der Ausführungsformen 2 bis 7, wobei die Klebharzkomponente gemäß (b) ein gewichtsmittleres Molekulargewicht $M_W$, bestimmt gemäß Prüfmethode 1 in einem Bereich von 400 bis 15.000 g/mol, bevorzugt in einem Bereich von 400 bis 5.000 g/mol, weiter bevorzugt in einem Bereich von 500 bis 2.000 g/mol aufweist.

9. Laminat gemäß einer der Ausführungsformen 2 bis 8, wobei die Klebharzkomponente gemäß (b) ein oder mehrere Materialien, ausgewählt aus der Gruppe bestehend aus nicht hydrierten, partiell oder vollständig hydrierten Harzen auf Basis von Kolophonium oder Kolophoniumderivaten, hydrierten Polymerisaten des Dicyclopentadiens, nicht hydrierten, partiell, selektiv oder vollständig hydrierten Kohlenwasserstoffharzen auf Basis von C-5, C-5/C-9 oder C-9 Monomergemischen und Polyterpenharzen auf Basis von α-Pinen und/oder β-Pinen und/oder δ-Limonen umfasst.

10. Laminat gemäß einer der Ausführungsformen 2 bis 9, wobei die Weichharzkomponente gemäß (c) eine Erweichungstemperatur von < 30 °C, bestimmt gemäß Prüfmethode 2, aufweist.

11. Laminat gemäß einer der Ausführungsformen 2 bis 10, wobei die Weichharzkomponente gemäß (c) ein Kolophonium-, ein Kohlenwasserstoff- oder Polyterpen-basierendes Weichharz umfasst.

12. Laminat gemäß einer der Ausführungsformen 2 bis 11, wobei die erste Haftklebeschicht gemäß (i) und/oder die zweite Haftklebeschicht gemäß (iv) die Weichharzkomponente gemäß (c) in einem Bereich von 0,1 bis 15 Gew.-%, bevorzugt in einem Bereich von 2 bis 10 Gew.-% umfasst.

13. Laminat einer der Ausführungsformen 1 bis 12, wobei die erste Haftklebeschicht gemäß (i) und/oder die zweite Haftklebeschicht gemäß (iv) zusätzlich Additive (d) umfasst.

14. Laminat gemäß Ausführungsform 13, wobei das Additiv gemäß (d) ein oder mehrere Materialien, ausgewählt aus der Gruppe bestehend aus Lichtschutzmitteln, Flammschutzmitteln, Füllstoffen, Farbstoffen, Pigmenten, Plastifizierungsmitteln, Antioxidationsmitteln, Prozessstabilisatoren, Verarbeitungshilfsmitteln und Endblockverstärkerharzen umfasst.

15. Laminat gemäß einer der Ausführungsformen 1 bis 14, wobei die erste Haftklebeschicht gemäß (i) und/oder die zweite Haftklebeschicht gemäß (iv) eine Dicke in einem Bereich von 25 bis 3000 μm, bevorzugt in einem Bereich von μm 50 bis 1000 μm aufweist.

16. Laminat gemäß einer der Ausführungsformen 1 bis 15, wobei die erste Haftklebeschicht gemäß (i) und/oder die zweite Haftklebeschicht gemäß (iv) eine durch Dehnung in Richtung der Verklebungsebene wiederablösbare Haftklebeschicht ist.

17. Laminat gemäß einer der Ausführungsformen 1 bis 16, wobei die erste Haftklebeschicht gemäß (i) und/oder die zweite Haftklebeschicht gemäß (iv) eine Reißdehnung von mindestens 100 %, bestimmt gemäß Prüfmethode 3 und einem Rückstellvermögen von über 50 %, bestimmt gemäß Prüfmethode 4, aufweist.

18. Laminat gemäß einer der Ausführungsformen 1 bis 17, wobei die Metallschicht gemäß (ii) ein oder mehrere Materialien, ausgewählt aus der Gruppe bestehend aus Aluminium, Kupfer, Nickel, Eisen und Stahl, bevorzugt Aluminium und Kupfer, umfasst.

19. Laminat gemäß einer der Ausführungsformen 1 bis 18, wobei die Metallschicht gemäß (ii) eine Dicke in einem Bereich von 1 bis 200 $\mu$m, bevorzugt in einem Bereich von 5 bis 100 $\mu$m aufweist.

20. Laminat gemäß einer der Ausführungsformen 1 bis 19, wobei die Metallschicht gemäß (ii) zusätzlich einen Träger umfasst, wobei der Träger ein oder mehrere Materialien, ausgewählt aus der Gruppe bestehend aus Polyethylenterephthalat, Polyethylen und Polypropylen, bevorzugt Polyethylenterephthalat umfasst.

21. Laminat gemäß einer der Ausführungsformen 1 bis 20, wobei die Metallschicht gemäß (ii) induktiverwärmt werden kann, weiter bevorzugt kann die Metallschicht gemäß (ii) auf eine Temperatur in einem Bereich von 50 bis 200 °C, besonders bevorzugt in einem Bereich von 70 bis 180 °C, in einem Magnet-Feld einer Frequenz in einem Bereich von 100 Hz bis 200 kHz, bevorzugt in einem Bereich von 5 kHz bis 50 kHz, besonders bevorzugt in einem Bereich von 10 kHz bis 30 kHz, weiter bevorzugt für eine Zeitdauer in einem Bereich von 1 bis 20 s, besonders bevorzugt in einem Bereich von 5 bis 15 s erwärmt werden.

22. Laminat gemäß einer der Ausführungsformen 1 bis 21, wobei die Treibmittelschicht gemäß (iii) ein oder mehrere Materialien, ausgewählt aus der Gruppe bestehend aus Azoverbindungen, Hydrazinverbindungen, Sulfonylsemicarbazidverbindungen, Tetrazolverbindungen, N-Nitrosoverbindungen und Carbonatverbindungen umfasst.

23. Laminat gemäß einer der Ausführungsformen 1 bis 12, wobei die Treibmittelschicht gemäß (iii) expandierbare, thermoplastische Mikrosphären umfasst.

24. Laminat gemäß Ausführungsform 23, wobei die expandierbaren, thermoplastischen Mikrosphären eine thermoplastische Polymerschale und ein darin eingeschlossenes Treibmittel umfassen.

25. Laminat gemäß einer der Ausführungsformen 1 bis 24, wobei die Treibmittelschicht gemäß (iii) eine Dicke in einem Bereich von 10 bis 150 $\mu$m, bevorzugt in einem Bereich von 25 bis 100 $\mu$m aufweist.

26. Laminat gemäß einer der Ausführungsformen 1 bis 25, wobei die Treibmittelschicht gemäß (iii) mindestens 50 Gew.-%, bevorzugt mindestens 90 Gew.-% eines thermoplastischen Polyurethans umfasst.

27. Laminat gemäß Ausführungsform 26, wobei das thermoplastische Polyurethan mindestens eine Polyisocyanatkomponente und mindestens eine Polyolkomponente umfasst.

28. Laminat gemäß Ausführungsform 26 oder 27, wobei das thermoplastische Polyurethan eine thermoplastische Polyurethan-Dispersion umfasst.

29. Laminat gemäß einer der Ausführungsformen 26 bis 28, wobei das thermoplastische Polyurethan herstellbar ist aus einer Polymerisationsmischung enthaltend mindestens ein Diisocyanat, mindestens ein Polyesterpolyol und optional mindestens ein Alkandiol.

30. Laminat gemäß Ausführungsform 29, wobei das mindestens ein Diisocyanat ausgewählt ist aus der Gruppe bestehend aus Toluoldiisocyanat (TDI), p-Phenylendiisocyanat (PPDI), 4,4'-Diphenylmethandiisocyanat (MDI), p,p'-Bisphenyldiisocyanat (BPDI), Isophorondiisocyanat (IPDI), 1,6-Hexamethylenediisocynat (HDI), oder 4,4'-Diisocyanatodicyclohexylmethan (H12MDI), bevorzugt Toluoldiisocyanat (TDI).

31. Laminat gemäß einer der Ausführungsformen 27 bis 30, wobei die Polyisocyanatkomponente ein zahlenmittleres Molekulargewicht $M_n$, bestimmt gemäß Prüfmethode 1, in einem Bereich von 60 bis 50.000 g/mol, bevorzugt in einem Bereich von 400 bis 10.000 g/mol, weiter bevorzugt in einem Bereich von 400 bis 6.000 g/mol, aufweist.

32. Laminat gemäß einer der Ausführungsformen 27 bis 31, wobei die Polyolkomponente ein oder mehrere Materialien ausgewählt aus der Gruppe bestehend aus Alkandiolen, Polyetherdiolen, Polyesterdiolen, Polycarbonatdiolen, Polycaprolactonpolyolen und Polyacrylatpolyolen, bevorzugt Polyetherdiolen, Polyesterdiolen und Polycarbonatdiolen umfasst.

33. Laminat gemäß der Ausführungsform 32, wobei die Polyolkomponente ein oder mehrere Materialien ausgewählt aus der Gruppe bestehend aus Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol, bevorzugt Butandiol umfasst.

34. Laminat gemäß einer der Ausführungsformen 27 bis 33, wobei die Polyolkomponente ein zahlenmittleres Molekulargewicht $M_n$, bestimmt gemäß Prüfmethode 1 in einem Bereich von 60 bis 50.000 g/mol, bevorzugt in einem Bereich von 400 bis 10.000 g/mol, weiter bevorzugt in einem Bereich von 400 bis 6.000 g/mol aufweist.

35. Laminat gemäß einer der Ausführungsformen 1 bis 34, wobei die Treibmittelschicht gemäß (iii) bei einer Temperatur in einem Bereich von 40 bis 200 °C, bevorzugt von 50 bis 120 °C ablösbar ist.

36. Verfahren zur Herstellung des Laminats gemäß einem der Ausführungsformen 1 bis 35, wobei die erste Haftklebeschicht gemäß (i) und/oder die zweite Haftklebeschicht gemäß (iv) durch direkte Beschichtung oder durch Laminierung, bevorzugt Heißlaminierung aufgetragen wird.

37. Anordnung, umfassend das Laminat gemäß einem der Ausführungsformen 1 bis 35 und mindestens ein Substrat, bevorzugt mindestens zwei Substrate, weiter bevorzugt befindet sich das Laminat gemäß einem der Ausführungsformen 1 bis 36 zwischen zwei Substraten.

38. Verfahren zum Ablösen des Laminats gemäß einer der Ausführungsform 1 bis 35, umfassend:

- Aussetzen der Anordnung gemäß der Ausführungsform 37 einem induktiven Erwärmen in einem Magnet-Wechselfeld einer Frequenz in einem Bereich von 100 Hz bis 200 kHz, bevorzugt in einem Bereich von 5 kHz bis 50 kHz, besonders bevorzugt in einem Bereich von 10 kHz bis 30 kHz; und/oder

- Aussetzen der Anordnung gemäß der Ausführungsform 37 einer Temperatur in einem Bereich von 40 bis 200 °C, bevorzugt in einem Bereich von 50 bis 120 °C; und

- Trennen des Laminats von mindestens einem Substrat, bevorzugt von mindestens zwei Substraten.

39. Verfahren gemäß Ausführungsform 38, wobei das Trennen eine Expansion der Treibmittelschicht gemäß (iii) umfasst.

40. Verfahren gemäß Ausführungsform 39, wobei das Trennen ein dehnendes Verstrecken in Richtung der Verklebungsebene der ersten Haftklebeschicht gemäß (i) und/oder der zweiten Haftklebeschicht gemäß (iv) umfasst.

41. Verfahren gemäß Ausführungsform 40, wobei durch das dehnende Verstrecken in Richtung der Verklebungsebene die Klebmasserückstände der ersten Haftklebeschicht gemäß (i) und/oder der zweiten Haftklebeschicht gemäß (iv) rückstandsfrei oder fast rückstandsfrei vom Untergrund gelöst werden können.

42. Verwendung des Laminats gemäß einer der Ausführungsform 1 bis 35 in elektronischen Geräten, Automobilen, medizinischen Geräten und zahnmedizinischen Geräten.

**Kurze Beschreibung der Figuren**

Weitere Einzelheiten und Merkmale der vorliegenden Erfindung ergeben sich aus der Beschreibung von Figuren und Ausführungsbeispielen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:

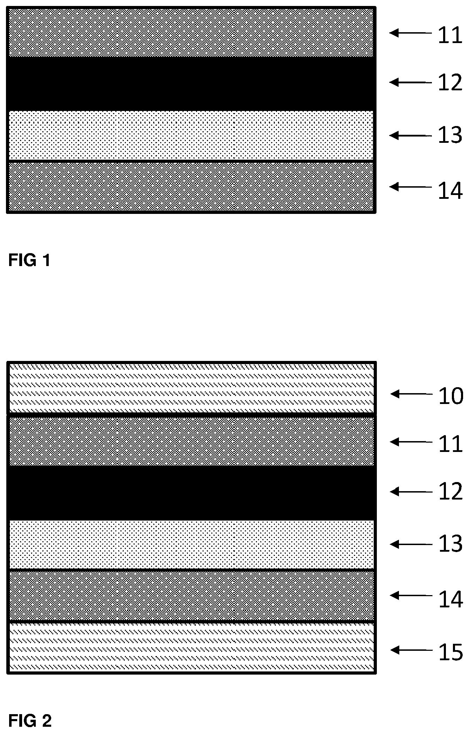

Figur 1: ein Laminat gemäß einer Ausführungsform der vorliegenden Erfindung umfassend eine erste Haftklebeschicht 11, eine Metallschicht 12, eine Treibmittelschicht 13 und eine zweite Haftklebeschicht 14;

Figur 2: eine Anordnung gemäß einer Ausführungsform der vorliegenden Erfindung umfassend zwei Substrate 10 und 15, eine erste Haftklebeschicht 11, eine Metallschicht 12, eine Treibmittelschicht 13 und eine zweite Haftklebeschicht 14;

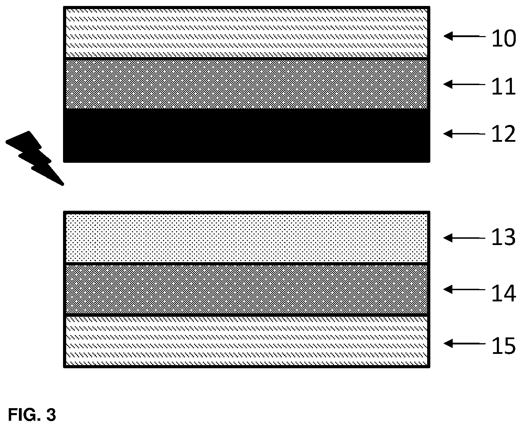

Figur 3:  ein Verfahren zum Ablösen des Laminats, wobei das Trennen zwischen der Metallschicht 12 und der Treibmittelschicht 13 in einem Magnet-Feld erfolgt;

**Beschreibung der Ausführungsbeispiele**

Weitere Einzelheiten und Merkmale der vorliegenden Erfindung ergeben sich aus der Beschreibung von Ausführungsbeispielen. Hierbei können die jeweiligen Merkmale für sich alleine oder zu mehreren in Kombination miteinander verwirklicht sein. Die Erfindung ist nicht auf die Ausführungsbeispiele beschränkt.

**Prüfmethoden:**

**Prüfmethode 1: Molekulargewicht $M_n$ und $M_w$**

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 $\mu$l klarfiltrierter Probe (Probenkonzentration 3 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Ä, 8,0 mm * 50 mm (Angaben hier und im Folgenden in der Reihenfolge: Typ, Partikelgrösse, Porosität, mInnendurchmesser * Länge; 1 A = $10^{-10}$ m) verwendet. Zur Auftrennung wird eine Kombination der Säulen des Typs PSS-SDV, 5 $\mu$m, $10^3$ Ä sowie $10^5$ A und $10^6$ A mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

**Prüfmethode 2: Erweichungstemperatur**

Die Erweichungstemperatur wird nach der einschlägigen Methodik durchgeführt, die als Ring & Ball bekannt ist und nach ASTM E28 standardisiert ist.

**Prüfmethode 3: Reißdehnung**

Die Reißdehnung wurde in Anlehnung an DIN 53504 (2017-03) unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

**Prüfmethode 4: Rückstellvermögen**

Zur Messung des Rückstellvermögens wurden die Haftklebestreifen um 100 % gedehnt, in dieser Dehnung für 30 s gehalten und dann entspannt. Nach einer Wartezeit von 1 min wurde erneut die Länge gemessen.

Das Rückstellvermögen berechnet sich nun wie folgt:

$$RV = ((L_{100} - L_{end}) / L_0)*100$$

mit RV = Rückstellvermögen in %

$L_{100}$ : Länge des Klebestreifens nach der Dehnung um 100 %

$L_0$ : Länge des Klebestreifens vor der Dehnung

$L_{end}$ : Länge des Klebestreifens nach der Relaxation von 1 min.

Das Rückstellvermögen entspricht dabei der Elastizität.

**Prüfmethode 5: Glasübergangstemperatur $T_g$**

Die Glasübergangstemperatur von Polymeren wird mittels dynamischer Scanning Kalorimetrie (DSC) bestimmt. Dazu werden ca. 5 mg der unbehandelten Polymerproben in ein Aluminiumtiegelchen (Volumen 25 $\mu$L) eingewogen

und mit einem gelochten Deckel verschlossen. Zur Messung wird ein DSC 204 F1 der Firma Netzsch verwendet und unter Stickstoff zur Inertisierung gearbeitet. Die Probe wird zunächst auf -150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet. An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

**Prüfmethode 6: Push-Out Test (z-Ebene)**

Der Push-out-Test gibt Aufschluss darüber, wie widerstandsfähig die Verklebung eines Bauteils in einem rahmenförmigen Körper, wie beispielsweise einem Fenster oder eines Displays in einem Gehäuse, ist.

Aus dem zu untersuchenden Klebeband wurde eine rechteckige, rahmenförmige Probe ausgeschnitten (Außenmaß 33 mm x 33 mm; Randbreite jeweils 2,0 mm; Innenmaß (Fensteröffnung) 29 mm x 29 mm, Klebfläche 248 mm$^2$ auf jeweils Ober- und Unterseite). Diese Probe wurde auf einen rechteckigen PC-Kunststoffrahmen (PC = Polycarbonat) (Außenmaße 40 mm x 40 mm; Randbreite der langen Ränder jeweils 8 mm; Randbreite der kurzen Ränder jeweils 10 mm; Innenmaße) geklebt (Fensteröffnung) 24 mm x 24 mm; Dicke 3 mm). Auf die andere Seite der Probe des doppelseitigen Klebebands wurde eine rechteckige PC-Folie mit Abmessungen von 35 mm x 35 mm geklebt. Es wurde die volle Klebefläche des zur Verfügung stehenden Klebebandes ausgenutzt. PC-Rahmen, Klebebandprobe und PC-Fenster wurden so verklebt, dass die geometrischen Mittelpunkte, die Winkelhalbierenden der spitzen Diagonalen und die Winkelhalbierenden der stumpfen Diagonalen der Rechtecke jeweils aufeinanderlagen (Ecke an Ecke, lange Seiten an langen Seiten, kurze Seiten an kurzen Seiten). Die Klebfläche betrug 248 mm$^2$. Die Verklebung wurde mit 248 N für 5 s gepresst und 24 Stunden unter Konditionierung bei 23°C/50 % relativer Luftfeuchtigkeit gelagert.

Unmittelbar nach der Lagerung wurde der Klebeverbund aus PC-Rahmen, Klebeband und PC-Fenster mit den überstehenden Kanten des PC-Rahmens so auf eine Rahmenkonstruktion (Probenhalter) aufgelegt, dass der Verbund horizontal und das PC-Fenster nach unten, frei hängend ausgerichtet ist.

Anschließend wird ein Druckstück senkrecht von oben mit einer konstanten Geschwindigkeit von 10 mm/s durch das Fenster des PC-Rahmens bewegt, sodass er mittig auf die PC-Platte drückt, und die jeweilige Kraft (ermittelt aus jeweiligen Druck und Kontaktfläche zwischen Druckstück und Platte) in Abhängigkeit von der Zeit vom ersten Kontakt des Druckstücks mit der PC-Platte bis kurz nach dem Fallen der Platte (Messbedingungen 23 °C, 50 % relative Luftfeuchtigkeit) gemessen wird. Als Antwort des Push-out-Tests wird die unmittelbar vor dem Versagen der Klebeverbindung zwischen PC-Platte und PC-Rahmen wirkende Kraft (Maximalkraft $F_{max}$ im Kraft-Zeit-Diagramm in N) aufgezeichnet.

**Verwendete Materialien:**

**Elastomerkomponente:**

| | |
|---|---|
| Kraton D1152: | Styrol-Butadien-Styrol-Elastomer bestehend aus hauptsächlich 2 und 3 Styrol-Butadien-Blöcken mit einem Styrolanteil von 30% und einem 2-Block-Anteil von 15%, von der Firma Kraton |
| Europrene Sol T 190: | Styrol-Isopren-Styrol-Blockcopolymer bestehend aus hauptsächlich 2- und 3-Blöcken von Styrol-Isopren mit einem Styrolanteil von 16% und einem 2-Blockanteil von 25% der Firma Versalis |

**Klebharzkomponente:**

| | |
|---|---|
| Dercolyte A 115: | Terpenharz aus hauptsächlich alpha-Pinen mit einem Erweichungspunkt von 115°C erhältlich von der Fa. DRT |
| Foralyn 110: | Kolophoniumharz mit einem Erweichungspunkt von 110°C erhältlich von der Fa. Eastman |
| Regalite R 1100: | Hydriertes Kohlenwasserstoffharz auf C9-Basis mit einem Erweichungspunkt von 100°C erhältlich von der Fa. Eastman |

**Weichharzkomponente:**

Wingtack 10:    Flüssiges Harz auf Basis nicht hydrierter Kohlenwassertoffe erhältlich von der Firma Goodyear

**Plastifizierungsmittel:**

TerPib 2600:    Niedermolekulares flüssiges Polyisobutylen vertrieben von der Firma TerHell

**Antioxidantien:**

Irganox 1010:    Primäres Antioxidans der Firma BASF

**Polyurethan-Dispersion:**

Impranil DL 116:    anionisch stabilisierte Polyester-PU-dispersion der Firma Covestro

**Mikrosphären:**

Expancel 920 DU20:    expandierbare, thermoplastische Mikrosphären (Mikroballons) mit einer Größe nach Expansion von ca. 20 $\mu$m der Fa. Nuryon

**Beispiele:**

**Beispiel 1:**

Als Klebmasse der ersten Haftklebeschicht und/oder der zweiten Haftklebeschicht werden folgende Materialien eingesetzt:

48,5 Gew.-% Kraton D 1152

48,5 Gew.-% Dercolyte A 115

2,5 Gew.-% Wingtack 10

0,5 Gew.-% Irganox 1010.

Die oben gezeigten Materialien werden in Toluol gelöst, wobei der Feststoffgehalt auf 35 Gew.-% eingestellt wird. Die erhaltene Mischung wird dann mit einem Streichbalken auf einen PET-Liner, ausgerüstet mit einem trennenden Silikon, ausgestrichen, so dass nach Trocknen bei 110 °C eine Schichtdicke von 50 $\mu$m entsteht.

Für die Herstellung der Treibmittelschicht werden folgende Materialien eingesetzt:

PU-Dispersion Impranil DL 1116 99,5 Gew.-%

Verdicker Borchi Gel 0625 0,5 Gew.-%.

Dabei erfolgt die Abmischung der Polyurethan-Dispersion mit dem Verdicker über eine herkömmliche vertikale Rührapparatur mit einem Visco Jet-Rührer.

Impranil DL 1116 99,5 Gew.-% und der Verdicker Borchi Gel 0625 0,5 Gew.-% werden dazu in einem Behälter vorgelegt und vorsichtig gerührt. Eine Bildung von Tromben oder jegliches Einrühren von Luft soll im gesamten Abmischprozess vermieden werden. Nach dem eine homogene Mischung entstanden ist, werden zu 100 Teilen Dispersion (berechnet auf fest) 20 Teile unexpandierte Mikrosphären (Mikroballons) (Expancel 920 DU20) hinzugefügt, wobei die Zugabe als Schlämme in Wasser erfolgt.

Herstellung des Laminats:

Die so erhaltene Mischung wird nun mit einem Rakel auf ein Verbund aus 12 $\mu$m Aluminium und 12 $\mu$m PET ausgestrichen und getrocknet, wobei die Aluminiumseite des Verbundes beschichtet wird. Nach Trocknen bei 110 °C, bei dem die Mikroballons noch nicht geschäumt werden, entsteht eine Schichtdicke von 30 $\mu$m.

Anschließend wird sowohl auf die Polyurethanseite der Treibmittelschicht als auch auf die PET-Seite des neu entstandenen Verbundes jeweils die Klebmasse für die Haftklebeschicht laminiert. Es entsteht dadurch ein doppelseitig klebendes Laminat mit einer Schichtdicke von ca. 155 $\mu$m.

Dieses Laminat wird wie unter Push-Out Test beschrieben zwischen zwei PC (Polycarbonat) Oberflächen verklebt.

Anschließend wird die Push-Out Kraft gemessen.

Das Laminat zwischen den beiden PC-Platten wird dann in einem Magnetfeld bei 25 kHz für 10 s gelagert.

Anschließend wird das Muster entnommen und die Push-Out Kraft erneut gemessen.

Die Ergebnisse sind in der Tabelle 1 zusammengefasst.

Nach dem Lösen der beiden Substrate können die verbliebenen Klebmassereste leicht entfernt werden. Der Bruch findet zwischen der PU-Schicht (Treibmittelschicht) und der Aluminiumschicht statt. Die Reste des Laminats mit der Aluminiumschicht können leicht durch Abschälen entfernt werden, wobei es keine Klebmasserückstände auf dem PC-Substrat gibt.

Die andere Seite kann leicht durch dehnendes Verstrecken entfernt werden, indem die verbleibenden Klebmassereste der Haftklebeschicht inklusive des Polyurethans der Treibmittelschicht beginnend von einer Ecke gedehnt werden. Auch hier lassen sich die Reste rückstandsfrei entfernen, so dass die PC-Körper ohne Reinigung wiedereingesetzt werden könnten.

**Beispiel 2:**

Als Klebmasse der ersten Haftklebeschicht und/oder der zweiten Haftklebeschicht werden folgende Materialien eingesetzt:

50 Gew.-% Europrene Sol T 190

47 Gew.-% Foralyn 110

2,5 Gew.-% TerPib 2600

0,5 Gew.-% Irganox 1010.

Die oben gezeigten Materialien werden in Toluol gelöst, wobei der Feststoffgehalt auf 40 Gew.-% eingestellt wird. Die erhaltene Mischung wird dann mit einem Streichbalken auf einen PET-Liner, ausgerüstet mit einem trennenden Silikon, ausgestrichen, so dass nach Trocknen bei 110 °C eine Schichtdicke von 50 $\mu$m entsteht.

Die Treibmittelschicht ist dieselbe wie in Beispiel 1.

Die so erhaltene Mischung wird nun mit einem Rakel auf eine 20 $\mu$m dicke Aluminiumfolie ausgestrichen und getrocknet. Nach Trocknen bei 110 °C, bei dem die Mikrosphären (Mikroballons) noch nicht geschäumt werden, entsteht eine Schichtdicke von 30 $\mu$m.

Anschließend wird sowohl auf die Polyurethanseite der Treibmittelschicht als auch auf die Aluminium-Seite des neu entstandenen Verbundes jeweils die Klebmasse für die Haftklebeschicht laminiert. Es entsteht dadurch ein doppelseitig klebendes Laminat mit einer Schichtdicke von ca. 150 $\mu$m.

Dieses Laminat wird wie unter Push-Out Test beschrieben zwischen zwei PC (Polycarbonat) Oberflächen verklebt.

Anschließend wird die Push-Out Kraft gemessen.

Das Laminat zwischen den beiden PC-Platten wird dann in einem Magnetfeld bei 30 kHz für 5 s gelagert.

Anschließend wird das Muster entnommen und die Push-Out Kraft erneut gemessen.

Die Ergebnisse finden sich wieder in der Tabelle 1.

Nach dem Lösen der beiden Substrate können die verbliebenen Klebmassereste leicht entfernt werden. Der Bruch findet zwischen der PU-Schicht (Treibmittelschicht) und der Aluminiumschicht statt. Die Reste des Laminats mit der Aluminiumschicht können leicht durch Abschälen entfernt werden, wobei es keine Klebmasserückstände auf dem PC-Substrat gibt.

Die andere Seite kann leicht durch dehnendes Verstrecken entfernt werden, indem die verbleibenden Klebmassereste der Haftklebeschicht inklusive des Polyurethans der Treibmittelschicht beginnend von einer Ecke gedehnt werden. Auch hier lassen sich die Reste rückstandsfrei entfernen, so dass die PC-Körper ohne Reinigung wiedereingesetzt werden könnten.

**Beispiel 3:**

Als Klebmasse der ersten Haftklebeschicht und/oder der zweiten Haftklebeschicht werden folgende Materialien eingesetzt:

24 Gew.-% Kraton D1152

24 Gew. % Europrene Sol T 190

49 Gew.-% Regalite R 1100

2,5 Gew.-% Wingtack 10

0,5 Gew.-% Irganox 1010.

Die oben beschriebenen Materialien werden in Toluol gelöst, wobei der Feststoffgehalt auf 35 Gew.-% eingestellt wird. Die erhaltene Mischung wird dann mit einem Streichbalken auf einen PET-Liner, ausgerüstet mit einem trennenden Silikon, ausgestrichen, so dass nach Trocknen bei 110 °C eine Schichtdicke von 50 $\mu$m entsteht.

Für die Herstellung der Treibmittelschicht werden gleichen Materialien eingesetzt wie in den vorigen Beispielen, allerdings werden nur 15 Teile unexpandierte Mikrosphären (Mikroballons) (Expancel 920 DU20) hinzugefügt.

Die so erhaltene Mischung wird nun mit einem Rakel auf ein Verbund aus 12 $\mu$m Aluminium und 12 $\mu$m PET ausgestrichen und getrocknet, wobei die Aluminiumseite des Verbunds beschichtet wird. Nach Trocknen bei 110 °C, bei dem die Mikroballons noch nicht geschäumt werden, entsteht eine Schichtdicke von 30 $\mu$m.

Anschließend wird sowohl auf die Polyurethanseite der Treibmittelschicht als auch auf die PET-Seite des neu entstandenen Verbunds jeweils die Klebmasse laminiert. Es entsteht dadurch ein doppelseitig klebendes Laminat mit einer Schichtdicke von ca. 155 $\mu$m.

Dieses Laminat wird wieder, wie unter Push-Out Test beschrieben zwischen zwei PC (Polycarbonat) Oberflächen verklebt.

Anschließend wird die Push-Out Kraft gemessen.

Das Laminat zwischen den beiden PC-Platten wird dann in einem Magnetfeld bei 30 kHz für 10 s gelagert.

Anschließend wird das Muster entnommen und die Push-Out Kraft erneut gemessen.

Die Ergebnisse sind in der Tabelle 1 zusammengefasst.

Nach dem Lösen der beiden Substrate können die verbliebenen Klebmassereste leicht entfernt werden. Der Bruch findet zwischen der PU-Schicht (Treibmittelschicht) und der Aluminiumschicht statt. Die Reste des Laminats mit der Aluminiumschicht können leicht durch Abschälen entfernt werden, wobei es keine Klebmasserückstände auf dem PC-Substrat gibt.

Die andere Seite kann leicht durch dehnendes Verstrecken entfernt werden, indem die verbleibenden Klebmassereste der Haftklebeschicht inklusive des Polyurethans der Treibmittelschicht beginnend von einer Ecke gedehnt werden. Auch hier lassen sich die Reste rückstandsfrei entfernen, so dass die PC-Körper ohne Reinigung wiedereingesetzt werden könnten.

**Vergleichsbeispiele:**

**Vergleichsbeispiel V1:**

Wie Beispiel 1, wobei anstatt einer Klebmasse auf Basis von Vinylaromaten-Blockcopolymeren eine Acrylatmasse eingesetzt wird.

Ein für radikalische Polymerisationen konventioneller Reaktor wird mit 47,5 kg 2-Ethylhexylacrylat, 47,5 kg n-Butylacrylat, 5 kg Acrylsäure und 66 kg Benzin/Aceton (70/30) befüllt. Nach 45minütiger Durchleitung von Stickstoffgas unter Rühren wird der Reaktor auf 58 °C hochgeheizt und 50 g AIBN hinzugegeben. Anschließend wird das äußere Heizbad auf 75 °C erwärmt und die Reaktion konstant bei dieser Außentemperatur durchgeführt. Nach 1 h werden erneut 50 g AIBN zugegeben und nach 4 h wird mit 20 kg Benzin/Aceton Gemisch verdünnt. Nach 5,5 sowie nach 7 h wird jeweils mit 150 g Bis-(4-tert-butylcyclohexyl)peroxydicarbonat nachinitiiert. Nach 22 h Reaktionszeit wird die Polymerisation abgebrochen und auf Raumtemperatur abgekühlt. Das Polyacrylat hat ein mittleres Molekulargewicht von Mw = 386.000 g/mol, Polydispersität PD (Mw/Mn) = 7,6. Es wird eine 50 $\mu$m Schicht ausgestrichen.

Der Verbund aus Klebmasse, Metallschicht (mit PET), expandierbarer Treibmittelschicht und Klebmasse wird, wie im Beispiel 1 beschrieben erneut hergestellt.

Von dem Verbund wird nach Verkleben zwischen den beiden PC-Substraten erneut die Push-Out Kraft vor und nach Anlegen eines Magnetfeldes gemessen.

Nach dem Lösen der Verklebung lassen sich die Klebmassereste diesmal nicht so leicht entfernen. Beim Schälen der einen Seite bleiben Klebmassereste auf dem Substrat zurück. Ein Ablösen durch dehnendes Verstrecken der anderen Seite ist nicht möglich, da auch hier viele Masserückstände zurückbleiben.

**Vergleichsbeispiel V2:**

Wie Beispiel 1, wobei keine Mikroballons in die Polyurethanschicht eingearbeitet werden.

Hier zeigt sich, dass die Abnahme der Push-Out Kraft deutlich niedriger ausfällt als in Beispiel 1. Wenn der Push-Out Wert zu hoch ist, dann kann es passieren, dass beim Ablösen eines Bauteiles dieses verbogen oder anders beschädigt wird.

**Vergleichsbeispiel V3:**

Wie Beispiel 1, aber ohne Aluminiumschicht. Als Träger wird reines PET eingesetzt.

In diesem Fall kommt es nicht zu einer Erwärmung des Tapes und die Push-Out Kraft wird durch das Magnetfeld nicht reduziert.

Die Nachfolgende Tabelle 1 gibt die Ergebnisse der gemessenen Push-Out Kraft wieder.

| Beispiel | Push-Out nach Verkleben [N] | Push-Out nach Einwirkung des Magnetfeldes [N] | Entfernbarkeit der Klebebandreste |
|---|---|---|---|
| 1 | 74,4 | 18,3 | Keine Rückstände |
| 2 | 63,8 | 15,0 | Keine Rückstände |
| 3 | 70,9 | 20,5 | Keine Rückstände |
| V1 | 62,6 | 19,1 | Starke Rückstände |
| V2 | 72,8 | 55,0 | Keine Rückstände |
| V3 | 76,8 | 75,9 | Keine Rückstände |

Aus den Beispielen 1 bis 3 ist ersichtlich, dass eine hohe Verklebungsfestigkeit erzielt werden kann, zu sehen an den hohen Werten im Push-Out Test nach Verkleben. Durch das Einwirken des Magnetfeldes (Induktion) und die Expansion der Treibmittelschicht kann die Verklebungsfestigkeit deutlich gesenkt werden. Dabei ist eine Kraft kleiner als 30 N vorteilhaft, um eine Deformation der Bauteile beim Trennen zu verhindern. In allen drei Beispielen 1 bis 3 konnten die Laminatreste leicht durch Schälen bzw. dehnendes Verstrecken rückstandsfrei entfernt werden.

Im Gegensatz dazu zeigt das Vergleichsbeispiel 1, das die Verwendung einer anderen Klebmasse, in diesem Fall einer Acrylatmasse, dazu führen kann, dass trotz leichter Trennung der Verklebung ein rückstandsfreies Entfernen der Klebebandreste nicht möglich ist.

Vergleichsbeispiel 2 zeigt, dass die Treibmittelschicht für eine deutliche Verringerung der Verklebungsfestigkeit nötig ist. Die Push-Out Kraft nimmt zwar geringfügig ab, da die Klebmassen erwärmt und damit erweicht werden. Allerdings ist die Push-Out Kraft deutlich höher als 30 N, sodass die Gefahr besteht, dass die Substrate oder Bauteile, die verklebt waren, beschädigt werden.

Vergleichsbeispiel 3 zeigt, dass ohne eine Metallschicht die Induktion keine Wirkung hat und die Verklebungsfestigkeit durch das Magnetfeld nicht verringert werden kann.

**Bezugszeichenliste**

10   erstes Substrat

11   erste Haftklebeschicht

12   Metallschicht

13   Treibmittelschicht

14   zweite Haftklebeschicht

15   zweites Substrat


**Patentansprüche**

1.  Laminat, umfassend folgende Schichten:

    (i) eine erste Haftklebeschicht, umfassend ein Blockcopolymer, enthaltend mindestens einen Polymerblock gebildet aus Vinylaromaten und mindestens einen Polymerblock gebildet aus Alkenen;
    (ii) eine Metallschicht;
    (iii) eine Treibmittelschicht; und
    (iv) eine zweite Haftklebeschicht, umfassend ein Blockcopolymer, enthaltend mindestens einen Polymerblock gebildet aus Vinylaromaten und mindestens einen Polymerblock gebildet aus Alkenen.

2.  Laminat gemäß Anspruch 1, wobei die erste Haftklebeschicht gemäß (i) und/oder die zweite Haftklebeschicht gemäß (iv) eine Elastomerkomponente (a), eine Klebharzkomponente (b) und optional eine Weichharzkomponente (c), bevorzugt eine Elastomerkomponente (a), eine Klebharzkomponente (b) und eine Weichharzkomponente (c) umfasst.

3.  Laminat gemäß Anspruch 2, wobei die Elastomerkomponente gemäß (a) ein Blockcopolymer mit einem Aufbau A-B-A, $(A-B)_n$, $(A-B)_nX$ oder $(A-B-A)_nX$, bevorzugt ein Diblockcopolymer A-B und/oder ein Triblockcopolymer A-B-A, umfasst worin

    - die Blöcke A unabhängig voneinander ein Polymer herstellbar aus einer Polymerisationsmischung enthaltend Vinylaromatenmonomere mit 8 bis 12 C-Atomen;
    - die Blöcke B unabhängig voneinander ein Polymer herstellbar aus einer Polymerisationsmischung enthaltend Alkenmonomere mit 4 bis 18 C-Atomen;
    - X ein Rest eines Kopplungsreagenzes oder Initiators und
    - $n \geq 2$, umfassen.

4.  Laminat gemäß Anspruch 3, wobei die Blöcke A herstellbar sind aus einer Polymerisationsmischung enthaltend Styrol und $\alpha$-Methylstyrol, bevorzugt herstellbar sind aus einer Polymerisationsmischung enthaltend Styrol.

5.  Laminat gemäß Anspruch 3 oder 4, wobei die Blöcke B herstellbar sind aus einer Polymerisationsmischung enthaltend Monomere von 1,3-Dienen und Isobutylen, bevorzugt herstellbar sind aus einer Polymerisationsmischung enthaltend Butadien und/oder Isopren.

6.  Laminat gemäß einem der Ansprüche 3 bis 5, wobei die Blöcke A einen Anteil im Blockcopolymer in einem Bereich von 14 bis 35 Gew.-%, bevorzugt in einem Bereich von 14 bis 30 Gew.-%, und/oder wobei die Blöcke B einen Anteil im Blockcopolymer in einem Bereich von 65 bis 86 Gew.-% aufweisen.

7.  Laminat gemäß einem der Ansprüche 1 bis 6, wobei die erste Haftklebeschicht gemäß (i) und/oder die zweite Haftklebeschicht gemäß (iv) eine Dicke in einem Bereich von 25 bis 3000 $\mu$m, bevorzugt in einem Bereich von $\mu$m 50 bis 1000 $\mu$m aufweist.

8. Laminat gemäß einem der Ansprüche 1 bis 7, wobei die erste Haftklebeschicht gemäß (i) und/oder die zweite Haftklebeschicht gemäß (iv) eine durch Dehnung in Richtung der Verklebungsebene wiederablösbare Haftklebeschicht ist.

9. Laminat gemäß einem der Ansprüche 1 bis 8, wobei die Metallschicht gemäß (ii) ein oder mehrere Materialien, ausgewählt aus der Gruppe bestehend aus Aluminium, Kupfer, Nickel, Eisen und Stahl, bevorzugt Aluminium und Kupfer, umfasst.

10. Laminat gemäß einem der Ansprüche 1 bis 9, wobei die Metallschicht gemäß (ii) induktiv erwärmt werden kann, weiter bevorzugt kann die Metallschicht gemäß (ii) auf eine Temperatur in einem Bereich von 50 bis 200 °C, besonders bevorzugt in einem Bereich von 70 bis 180 °C, in einem Magnet-Feld einer Frequenz in einem Bereich von 100 Hz bis 200 kHz, bevorzugt in einem Bereich von 5 kHz bis 50 kHz, besonders bevorzugt in einem Bereich von 10 kHz bis 30 kHz, weiter bevorzugt für eine Zeitdauer in einem Bereich von 1 bis 20 s, besonders bevorzugt in einem Bereich von 5 bis 15 s erwärmt werden.

11. Laminat gemäß einem der Ansprüche 1 bis 10, wobei die Treibmittelschicht gemäß (iii) expandierbare, thermoplastische Mikrosphären umfasst.

12. Laminat gemäß einem der Ansprüche 1 bis 11, wobei die Treibmittelschicht gemäß (iii) mindestens 50 Gew.-%, bevorzugt mindestens 90 Gew.-% eines thermoplastischen Polyurethans umfasst.

13. Verfahren zur Herstellung des Laminats gemäß einem der Ansprüche 1 bis 12, wobei die erste Haftklebeschicht gemäß (i) und/oder die zweite Haftklebeschicht gemäß (iv) durch direkte Beschichtung oder durch Laminierung, bevorzugt Heißlaminierung aufgetragen wird.

14. Anordnung, umfassend das Laminat gemäß einem der Ansprüche 1 bis 12 und mindestens ein Substrat, bevorzugt mindestens zwei Substrate, weiter bevorzugt befindet sich das Laminat gemäß einem der Ansprüche 1 bis 12 zwischen zwei Substraten.

15. Verfahren zum Ablösen des Laminats gemäß einem der Ansprüche 1 bis 12, umfassend:

- Aussetzen der Anordnung gemäß Anspruch 14 einem induktiven Erwärmen in einem Magnet-Wechselfeld einer Frequenz in einem Bereich von 100 Hz bis 200 kHz, bevorzugt in einem Bereich von 5 kHz bis 50 kHz, besonders bevorzugt in einem Bereich von 10 kHz bis 30 kHz; und/oder
- Aussetzen der Anordnung gemäß Anspruch 14 einer Temperatur in einem Bereich von 40 bis 200 °C, bevorzugt in einem Bereich von 50 bis 120 °C; und
- Trennen des Laminats von mindestens einem Substrat, bevorzugt von mindestens zwei Substraten.

16. Verwendung des Laminats gemäß einem der Ansprüche 1 bis 12 in elektronischen Geräten, Automobilen, medizinischen Geräten und zahnmedizinischen Geräten.

← 11

← 12

← 13

← 14

**FIG 1**

← 10

← 11

← 12

← 13

← 14

← 15

**FIG 2**

FIG. 3

Europäisches
Patentamt

European
Patent Office

Office européen
des brevets

**EUROPÄISCHER RECHERCHENBERICHT**

**Nummer der Anmeldung**

**EP 23 18 9637**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/195250 A1 (HOU JING QIANG [CN] ET AL) 23. Juni 2022 (2022-06-23) * Absätze [0002] – [0004], [0076], [0139]; Ansprüche 20, 21 * ----- | 1-10,13, 14,16 | INV. C09J5/06 C09J7/22 C09J7/28 C09J7/38 |
| Y | US 2012/034407 A1 (YAMANAKA EIJI [JP] ET AL) 9. Februar 2012 (2012-02-09) * [0001], [0080], [0141], [0148]-[0150], [0166]-[0168], [0187]-[0192], [0228], [0242]; Ansprüche; Abbildung 4c; Beispiel 9 * ----- | 1-16 | C09J153/02 |
| Y | DE 10 2012 223670 A1 (TESA SE [DE]) 26. Juni 2014 (2014-06-26) * Absatz [0001]; Ansprüche * ----- | 1-16 | |
| A | US 2013/081764 A1 (YAMANAKA EIJI [JP] ET AL) 4. April 2013 (2013-04-04) * [0001], [0027], [0064], [0079], [0094]-[0095], [0104], [0105], [0109]-[0115]; Ansprüche; Abbildungen; Beispiele * ----- | 1-16 | |
| A | WO 2021/200789 A1 (LINTEC CORP [JP]) 7. Oktober 2021 (2021-10-07) * Absätze [0001], [0050], [0126] – [0128], [0207]; Ansprüche 1, 8; Abbildungen; Beispiele * ----- | 1-16 | RECHERCHIERTE SACHGEBIETE (IPC) C09J |

Der vorliegende Recherchenbericht wurde für alle Patentansprüche erstellt

| Recherchenort | Abschlußdatum der Recherche | Prüfer |
|---|---|---|
| München | 22. November 2023 | Kahl, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 9637

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2023

| Im Recherchenbericht angeführtes Patentdokument | Datum der Veröffentlichung | Mitglied(er) der Patentfamilie | Datum der Veröffentlichung |
|---|---|---|---|
| US 2022195250 A1 | 23-06-2022 | CN 111607170 A | 01-09-2020 |
| | | EP 3931262 A1 | 05-01-2022 |
| | | JP 2022521102 A | 05-04-2022 |
| | | US 2022195250 A1 | 23-06-2022 |
| | | WO 2020174393 A1 | 03-09-2020 |
| US 2012034407 A1 | 09-02-2012 | CN 101835862 A | 15-09-2010 |
| | | EP 2204425 A1 | 07-07-2010 |
| | | JP 5171425 B2 | 27-03-2013 |
| | | JP 2009120808 A | 04-06-2009 |
| | | US 2012034407 A1 | 09-02-2012 |
| | | WO 2009054108 A1 | 30-04-2009 |
| DE 102012223670 A1 | 26-06-2014 | CN 104919017 A | 16-09-2015 |
| | | DE 102012223670 A1 | 26-06-2014 |
| | | DE 202013012781 U1 | 18-07-2019 |
| | | DE 202013012782 U1 | 26-07-2019 |
| | | DE 202013012803 U1 | 24-10-2019 |
| | | EP 2935498 A1 | 28-10-2015 |
| | | EP 3578618 A1 | 11-12-2019 |
| | | JP 6379108 B2 | 22-08-2018 |
| | | JP 2016504449 A | 12-02-2016 |
| | | KR 20150097696 A | 26-08-2015 |
| | | KR 20190002085 U | 14-08-2019 |
| | | KR 20190092625 A | 07-08-2019 |
| | | KR 20200013125 A | 05-02-2020 |
| | | TW 201430094 A | 01-08-2014 |
| | | US 2015337177 A1 | 26-11-2015 |
| | | WO 2014095382 A1 | 26-06-2014 |
| US 2013081764 A1 | 04-04-2013 | CN 103031076 A | 10-04-2013 |
| | | EP 2578654 A1 | 10-04-2013 |
| | | JP 2013079322 A | 02-05-2013 |
| | | KR 20130036717 A | 12-04-2013 |
| | | US 2013081764 A1 | 04-04-2013 |
| WO 2021200789 A1 | 07-10-2021 | CN 115397938 A | 25-11-2022 |
| | | JP WO2021200789 A1 | 07-10-2021 |
| | | KR 20220156522 A | 25-11-2022 |
| | | TW 202214802 A | 16-04-2022 |
| | | WO 2021200789 A1 | 07-10-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2493995 B1
- EP 1814703 B1
- EP 2516573 B1
- EP 3578618 B1

**In der Beschreibung aufgeführte Nicht-Patentliteratur**

- **C. SATO.** *Recycling and environmental aspects,* 2011, vol. 58 (20), 1506-1526
- **A. HUTCHINSON et al.** Overview of disbonding technologies for adhesive bonded joints. *Journal of Adhesion,* 2016, 737-755